# FASCICULE DE BREVET EUROPEEN

(11) **EP 3 390 167 B1**
(45) Date de publication et mention de la délivrance du brevet: **01.01.2020**
(21) Numéro de dépôt: 16815608.1
(22) Date de dépôt: 28.11.2016
(51) Int. Cl.: B60R 22/02

(54) **CEINTURE DE SÉCURITÉ DE SIEGE DE VEHICULE AVEC AMORTISSEMENT DE BRUIT**
SICHERHEITSGURT FÜR FAHRZEUGSITZ MIT RAUSCHVERMINDERUNG
SEATBELT FOR VEHICLE SEAT WITH NOISE REDUCTION

(30) Priorité: 16.12.2015 FR 1562438
(43) Date de publication de la demande: 24.10.2018
(73) Titulaire: PSA AUTOMOBILES S.A., 78300 Poissy (FR)
(72) Inventeur: THIEL, Marc, 25400 Exincourt (FR); COMBEAU, Frederic, 25750 Desandans (FR); VOITOT, Jean, 25250 Onans (FR); COMBET, Fabrice, 70400 Hericourt (FR); MARTIN, Philippe, 25200 Montbeliard (FR)
(86) Numéro de dépôt international: PCT/FR2016/053113
(87) Numéro de publication internationale: WO 2017/103369

(56) Documents cités:
- EP-A1- 2 208 647
- WO-A1-2013/168609
- DE-A1-102005 050 743
- JP-A- 2006 103 635

## Description

L'invention concerne les ceintures de sécurité qui équipent certains sièges, par exemple de véhicules automobiles, et plus précisément les passants qui équipent certaines ceintures de sécurité et sont chargés de limiter le coulissement de leur pêne extractible par rapport à leur sangle.

Certaines ceintures de sécurité, qui équipent certains sièges, notamment de véhicules automobiles, comprennent un pêne extractible dans lequel coulisse une sangle munie d'une butée amovible ou pas. Le pêne est destiné à être introduit par un passager dans un brin boucle comportant un mécanisme de verrouillage amovible afin de le maintenir temporairement attaché sur son siège.

La butée peut être réalisée par un passant fixe ou amovible rapporté sur la sangle de ceinture de sécurité ou par un pion de blocage serti dans la sangle.

Lorsque le pêne extractible repose sur la butée, sans être utilisé, la partie d'extrémité libre de son corps (opposée à son âme ou languette de verrouillage) peut, en présence de vibrations ou de chocs, venir heurter ou frotter un élément du véhicule, comme par exemple une garniture habillant une partie de sa structure. Ces heurts ou frottements induisent du bruit qui peut constituer une gêne pour les passagers du véhicule.

Afin de limiter ce bruit, il a été proposé, notamment dans le document brevet DE 10 2005 050 743, et tel qu'illustré à la figure 1, de fixer sur la face arrière 5 d'un passant 3 fixé sur la sangle 1 de ceinture de sécurité (face opposée au pêne extractible 4) un séparateur (ou espaceur) 6 destiné à venir s'intercaler entre la partie d'extrémité libre du corps du pêne extractible 4 et un élément voisin 2 du véhicule V comme la garniture d'une paroi de l'habitacle du véhicule. Ce séparateur (ou espaceur) 6 définit une boucle dont les deux bouts sont reliés entre eux en étant fixés solidairement sur la face arrière 5 du passant 3.

Le séparateur 6 sert également d'élément amortisseur de bruit de choc du pêne 4 contre la garniture 2.

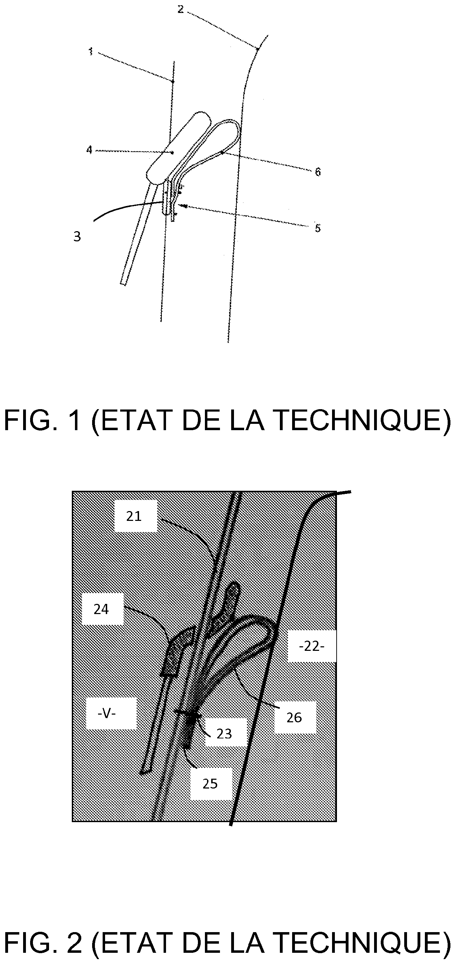

On connait également, comme illustrée à la figure 2, une butée 25 et un séparateur en forme de boucle 26, réalisé à partir d'un morceau de sangle rapporté sur la sangle 21 de la ceinture de sécurité, dont les deux bouts sont solidarisés entre eux et eux-mêmes solidarisés sur la sangle 21 de la ceinture par au moins une couture 23.

Les deux bouts de la boucle 36 cousus sur la sangle 2, définissent la butée 25 et la partie souple de la boucle 26 définit l'espaceur et l'amortisseur.

La forme en boucle autorise une déformation souple bien répartie, notamment des deux côtés correspondant aux deux bouts de la boucle 26.

Grâce à un tel séparateur 26, le pêne extractible 24 à moins de risque de heurter ou frotter sur un élément 22 du véhicule V.

Cependant, en fonction de l'environnement, en présence de vibrations ou de chocs importants, une simple boucle ne suffit pas pour supprimer tous risques de contact et continue ainsi à induire du bruit bien qu'elle soit réalisée dans un matériau anti-bruit, sans que le passager ne puisse y remédier.

Le document WO 2013/168609 A décrit une ceinture de sécurité selon le préambule de la revendication 1.

L'invention a donc pour but d'améliorer la situation.

Elle propose à cet effet une ceinture de sécurité de siège de véhicule automobile, comprenant une sangle et un pêne apte à coulisser le long de la sangle et au moins une butée supportant au moins boucle dont les deux bouts sont jointifs et solidarisés avec la sangle, la partie souple de la boucle étant apte à recevoir le pêne en fin de course contre la butée, la partie souple de la boucle (36) comportant au moins deux lobes (40, 41) obtenus par un enfoncement local de la partie souple de la boucle (36) vers son centre de manière à former un repli (39) constitué par les parties jointives de la boucle enfoncées maintenues solidaires entre elles, caractérisé en ce que la boucle est orientée selon une direction principale de la sangle, les bouts jointifs de la boucle étant orientés dans la même direction que celle de la sangle.

Selon une caractéristique, les deux lobes définissent un élément amortisseur pour le pêne en fin de course.

Selon une autre caractéristique, les deux lobes définissent un moyen anti-bruit vis-à-vis de l'environnement immédiat du pêne.

Selon une autre caractéristique, les parties jointives formant le repli sont solidarisées entre elles par une couture.

Selon une autre caractéristique, les bouts de la boucle sont solidarisés entre eux par une couture.

Selon une autre caractéristique, les bouts de la boucle sont solidarisés à la sangle par ladite couture.

D'autres caractéristiques et avantages de l'invention apparaîtront à l'examen de la description détaillée ci-après, et des dessins annexés, sur lesquels :
- la figure 1, déjà décrite, illustre de façon schématique, dans une vue de côté, un premier mode de réalisation d'une ceinture de sécurité dont la sangle est équipée d'un espaceur en forme de boucle selon l'état de la technique ;
- la figure 2, déjà décrite, illustre de façon schématique, dans une vue de côté, un deuxième mode de réalisation d'une ceinture de sécurité dont la sangle est équipée d'un espaceur en forme de boucle selon l'état de la technique ; et
- la figure 3, illustre de façon schématique, dans une vue de côté, un mode de réalisation d'une ceinture de sécurité dont la sangle est équipée d'un espaceur en forme de boucle complexe selon l'invention.

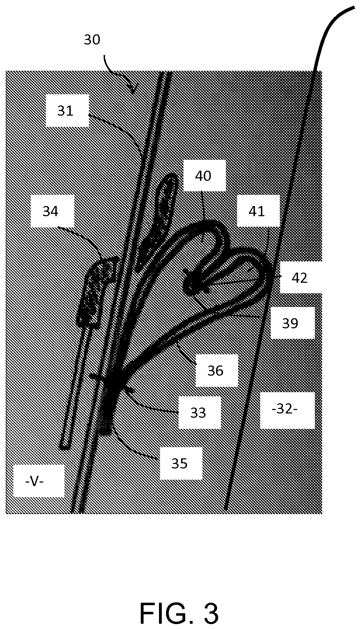

On a schématiquement représenté sur la figure 3 une ceinture de sécurité 30 destinée à équiper un siège (ou une partie de banquette), d'un véhicule automobile V. Le siège peut par exemple être un siège avant, ou un siège intermédiaire (dans le cas d'un véhicule à au moins trois rangs), ou encore un siège arrière. Les sièges ou banquette ne sont pas représentés.

Le mode de réalisation de la ceinture de sécurité 30 selon l'invention se rapproche de celui du deuxième mode de réalisation de l'état de la technique, illustré à la figure 2, à l'exception près de la boucle 36 qui, selon l'invention, est une boucle complexe.

Par boucle complexe, on entend une boucle qui ne suit pas une déformation naturelle quand on jointe ses deux bouts, déformation imposée par la taille de la boucle, la flexibilité et la souplesse du matériau de la boucle.

La boucle complexe 36 selon l'invention comporte deux lobes 40 et 41 obtenus par une déformation locale de la partie souple de la boucle 36.

Cette déformation est obtenue par un enfoncement local de la partie souple de la boucle 36, vers le centre de la boucle 36, et sensiblement dans sa partie la plus large de manière à définir un repli 39 formé par les parties jointives de la boucle 36 enfoncées et maintenues solidaires entre elles.

Le repli 39 dont la déformation naturelle tend à reformer la boucle d'origine 36, avant déformation, est bloquée par exemple par une couture d'assemblage simple 42.

Cette couture d'assemblage 42 est par exemple du même type que celle 33 utilisée pour assembler les bouts de la boucle sur la sangle 31.

L'assemblage des bouts de la boucle 36 sur la sangle 31, par la couture 33, définit une butée de fin course 35 du pêne 34 le long de la sangle 3.

La boucle complexe 36 avec ses deux lobes 40 et 41 est assimilable à une forme stylisée de « coeur » avec le premier lobe intérieur, côté sangle 31 et le deuxième lobe extérieur, apte à venir en contact avec l'environnement 32 de la sangle 31.

Le repli 39 de la boucle 36 ainsi réalisé permet de conserver une rigidité géométrique de la boucle 36 et de rigidifier localement la sangle 31.

Cette construction permet de dégager d'avantage le pêne 34 de son environnement immédiat constitué essentiellement par les diverses garnitures latérales 32 présentes dans l'habitacle du véhicule V et au final de ne plus avoir de bruit occasionné par le contact du pêne 34 sur les garnitures 32.

Le matériau utilisé pour réaliser la boucle 36 est notamment un morceau de sangle de ceinture de sécurité réalisé dans un matériau flexible et souple offrant à la fois une qualité d'amortissement du bruit et une tenue de la forme imposée, comme une forme en boucle par exemple, car c'est un matériau à la fois absorbant et résistant.

D'autre part, l'utilisation d'un morceau de sangle permet de garder un effet stylistique homogène avec l'ensemble de la ceinture de sécurité 30.

Toutefois d'autres matériaux peuvent être utilisés dans la mesure où ces matériaux respectent les propriétés de souplesse et de flexibilité contrôlées attendues pour pouvoir assurer un amortissement sans bruit.

La présente invention a été décrite en référence à une boucle 36 comportant deux lobes 40 et 41. Cependant, la boucle 36 pourrait comporter plusieurs lobes successifs, par exemple trois lobes obtenus de la même manière que pour la formation des deux lobes 40 et 41. Dans ce mode de réalisation à trois lobes, deux replis 39 seront ainsi formés de la même manière que celui formé pour les deux lobes 40 et 41.

Selon l'invention illustrée à la figure 3, la boucle 36 est orientée selon une direction principale parallèle à la direction principale de la sangle 31 de ceinture de sécurité. Les bouts jointifs de la boucle 36 sont orientés dans la même direction que celle de la sangle 31 (sensiblement verticale).

La couture 33 traverse un empilement de trois épaisseurs de sangle et s'étend, dans ce mode de réalisation, selon une direction perpendiculaire à la direction principale de la sangle 31, (sensiblement horizontale) dans la largeur de la sangle 31.

Selon encore un autre mode de réalisation, deux boucles 36 identiques montées « tête-bêche » pourraient être formées de manière symétrique de part et d'autre d'une même couture centrale. Cette double boucle pouvant être agencée dans une direction principale parallèle à la direction principale de la sangle.

## Revendications

1. Ceinture de sécurité (30) de siège de véhicule automobile (V), comprenant une sangle (31) et un pêne (34) apte à coulisser le long de la sangle (31) et au moins une butée (35) supportant au moins boucle (36) dont les deux bouts sont jointifs et solidarisés avec la sangle (31), la partie souple de la boucle (31) étant apte à recevoir le pêne (34) en fin de course contre la butée (35), la partie souple de la boucle (36) comporte au moins deux lobes (40, 41) obtenus par un enfoncement local de la partie souple de la boucle (36) vers son centre de manière à former un repli (39) constitué par les parties jointives de la boucle enfoncées maintenues solidaires entre elles, **caractérisé en ce que** la boucle (36) est orientée selon une direction principale de la sangle (31), les bouts jointifs de la boucle (36) étant orientés dans la même direction que celle de la sangle (31) .

2. Ceinture (30) selon la revendication 1, **caractérisée en ce que** les deux lobes (40, 41) définissent un élément amortisseur pour le pêne (34) en fin de course.

3. Ceinture (30) selon l'une des revendications précédentes, **caractérisée en ce que** les deux lobes (40, 41) définissent un moyen anti-bruit vis-à-vis de l'environnement immédiat (32) du pêne (34).

4. Ceinture (30) selon l'une des revendications précédentes, **caractérisée en ce que** les parties jointives formant le repli (39) sont solidarisées entre elles par une couture (42).

5. Ceinture (30) selon l'une quelconque des revendications précédentes, **caractérisée en ce que** les bouts de la boucle (36) sont solidarisés entre eux par une couture (33).

6. Ceinture (30) selon la revendication précédente, **caractérisée en ce que** les bouts de la boucle (36) sont solidarisés à la sangle (31) par la couture (33).

## Patentansprüche

1. Sicherheitsgurt (30) eines Sitzes eines Kraftfahrzeugs (V), der einen Gurt (31) und einen Riegel (34) umfasst, der angepasst ist, um entlang des Gurts (31) zu gleiten, und mindestens einen Anschlag (35), der mindestens eine Schleife (36) trägt, deren zwei Enden aneinander stoßend sind und mit dem Gurt (31) fest verbunden sind, wobei der biegsame Teil der Schleife (31) geeignet ist, den Riegel (34) am Wegende gegen den Anschlag (35) aufzunehmen, wobei der biegsame Teil der Schleife (36) mindestens zwei Keulen (40, 41) umfasst, die durch ein lokales Eindrücken des biegsamen Teils der Schleife (36) zu ihrer Mitte derart, dass eine Falte (39) gebildet wird, die aus den aneinander stoßenden Teilen der Schleife besteht, die fest aneinander gehalten eingedrückt werden, erhalten werden, **dadurch gekennzeichnet, dass** die Schleife (36) entlang einer Hauptrichtung des Gurts (31) ausgerichtet ist, wobei die aneinander stoßenden Enden der Schleife (36) in dieselbe Richtung wie der Gurt (31) ausgerichtet sind.

2. Sicherheitsgurt (30) nach Anspruch 1, **dadurch gekennzeichnet, dass** die zwei Keulen (40, 41) ein Dämpfungselement für den Riegel (34) am Wegende definieren.

3. Sicherheitsgurt (30) nach einem der vorstehenden Ansprüche, **dadurch gekennzeichnet, dass** die zwei Keulen (40, 41) ein Geräuschschutzmittel gegenüber der unmittelbaren Umgebung (32) des Riegels (34) definieren.

4. Sicherheitsgurt (30) nach einem der vorstehenden Ansprüche, **dadurch gekennzeichnet, dass** die aneinander stoßenden Teile, die die Falte (39) bilden, fest miteinander durch eine Naht (42) verbunden sind.

5. Sicherheitsgurt (30) nach einem der vorstehenden Ansprüche, **dadurch gekennzeichnet, dass** die Enden der Schleife (36) miteinander fest durch eine Naht (33) verbunden sind.

6. Sicherheitsgurt (30) nach dem vorstehenden Anspruch, **dadurch gekennzeichnet, dass** die Enden der Schleife (36) an dem Gurt (31) durch Nähen (33) fest verbunden sind.

## Claims

1. A seatbelt (30) for a motor vehicle seat (V), including a strap (31) and a tongue (34) capable of sliding along the strap (31) and at least one stop (35) supporting at least loop (36), the two ends of which are contiguous and secured to the strap (31), the flexible portion of the loop (31) being able to receive the tongue (34) at the end of travel against the stop (35), the flexible portion of the loop (36) comprises at least two lobes (40, 41) obtained by locally pressing the flexible portion of the loop (36) towards the centre thereof so as to form a fold (39) constituted by the contiguous pressed portions of the loop being held secured together, **characterized in that** the loop (36) is oriented along a principal direction of the strap (31), the contiguous ends of the loop (36) being oriented in the same direction as that of the strap (31).

2. The belt (30) according to claim 1, **characterized in that** the two lobes (40, 41) define a damping element for the tongue (34) at the end of travel.

3. The belt (30) according to one of the preceding claims, **characterized in that** the two lobes (40, 41) define an anti-noise means with respect to the immediate environment (32) of the tongue (34).

4. The belt (30) according to one of the preceding claims, **characterized in that** the contiguous portions forming the fold (39) are secured together by a seam (42) .

5. The belt (30) according to any one of the preceding claims, **characterized in that** the ends of the loop (36) are secured together by a seam (33).

6. The belt (30) according to the preceding claim, **characterized in that** the ends of the loop (36) are secured to the strap (31) by the seam (33).
